# EUROPEAN PATENT SPECIFICATION

(11) **EP 0 437 943 B1**
(45) Date of publication and mention of the grant of the patent: **24.04.1996**
(21) Application number: 90313557.2
(22) Date of filing: 13.12.1990
(51) Int. Cl.: G11B 23/087

(54) **Magnetic tape cassettes**
Magnetbandkassette
Cassette à bande magnétique

(30) Priority: 20.12.1989 JP 330839/89
(43) Date of publication of application: 24.07.1991
(73) Proprietor: SONY CORPORATION, Tokyo 141 (JP)
(72) Inventor: Sugiyama, Masanobu, c/o Patents Division, Shinagawa-ku, Tokyo 141 (JP)
(74) Representative: Cotter, Ivan John

(56) References cited:
- EP-A- 0 163 293
- EP-A- 0 210 854
- EP-A- 0 255 775
- EP-A- 0 323 199
- GB-A- 2 173 170
- US-A- 4 671 469

## Description

This invention relates to magnetic tape cassettes and more particularly, but not exclusively, to magnetic tape cassettes suitable for digital audio tape recorders using a rotary head (R-DAT).

A digital audio tape recorder has been proposed in which an analogue signal such as an audio signal is converted to a digital signal which is recorded on and/or reproduced from a magnetic tape. One such digital audio tape recorder is the R-DAT which utilizes a rotary head to provide a high recording density.

In a magnetic tape cassette used for high density recording, if a magnetic tape is smudged by oily components such as fingerprints and dust, a drop-out occurs in a reproduced signal. To avoid this, the magnetic tape must be shielded within the magnetic tape cassette.

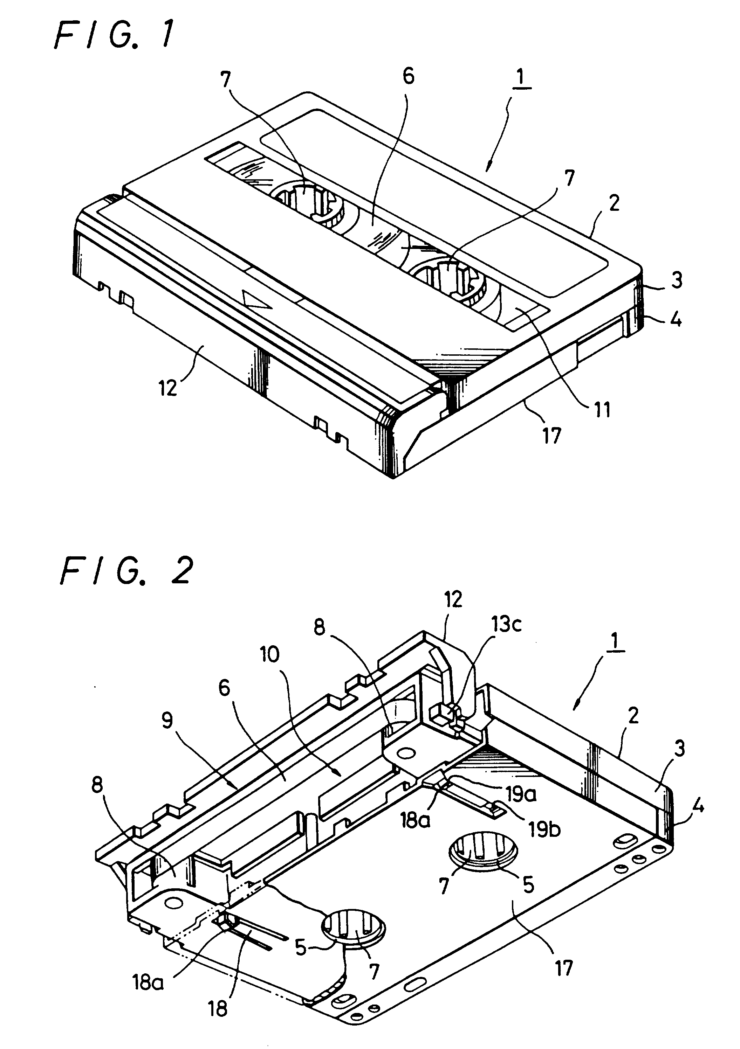

A magnetic tape cassette having a shield and suitable for an R-DAT will be explained with reference to Figures 1 to 4.

The magnetic tape cassette 1 includes a cassette casing 2 formed by fastening an upper half or upper part 3 and a lower half or lower part 4 by suitable means such as screws. A pair of reel shaft insertion apertures 5 are formed through the lower half 4, and a pair of reel hubs 7 around which a magnetic tape 6 is wound are rotatably supported on the pair of reel hubs 7. The tape 6 extends between left and right tape guides 8 provided in the lower half 4, and is exposed at a front surface opening 9 of the casing 2.

At the front portion of the lower half 4, a loading pocket portion 10 is formed and has a U-shaped recess formed at its portion corresponding to the rear side of the tape 6 exposed to the opening 9. When the tape cassette 1 is loaded onto a magnetic recording and reproducing apparatus (not shown), a tape loading guide member of the apparatus enters the pocket portion 10 and withdraws the tape 6 to the front of the casing 2 for tape loading.

A transparent window portion 11 is formed on the upper half 3 so that the user can visually confirm the amount of tape wound around the reel hubs 7. A front lid 12 which opens and closes the opening 9 of the casing 2 is attached to the front end portion of the upper half 3 so that it can be rotated up and down. When the tape cassette 1 is not in use, the opening 9 is closed by the lid 12. When the tape cassette 1 is loaded onto the magnetic recording and reproducing apparatus, the lid 12 is opened and rotated in the up direction by a mechanism on the apparatus, whereby the tape 6 is exposed.

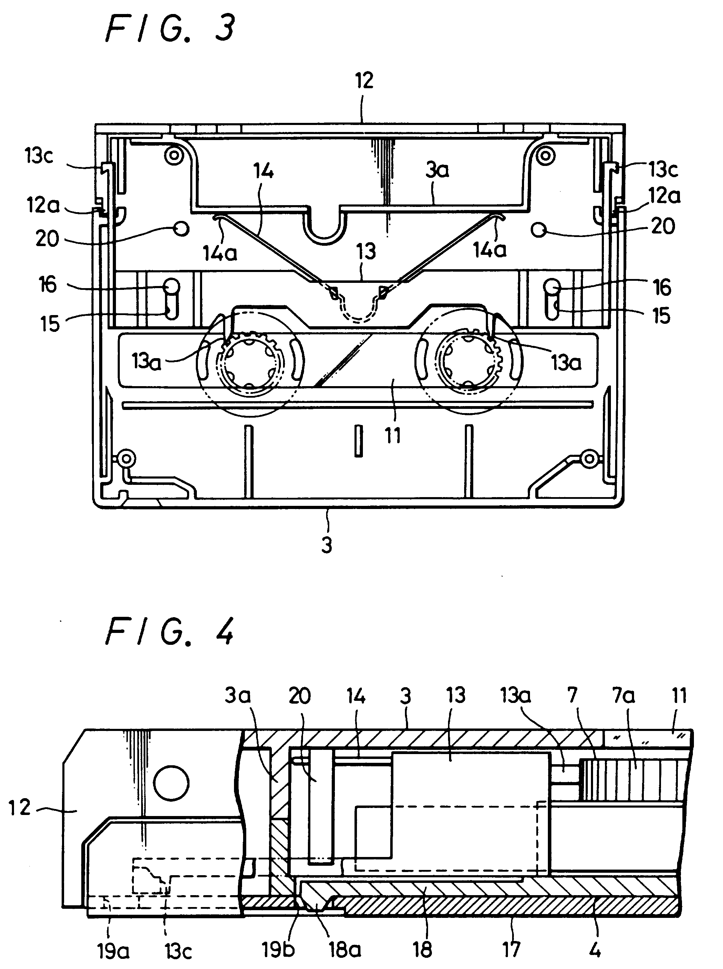

Further, as shown in Figure 3, a hub lock member 13 is assembled within the cassette casing 2 so as to inhibit the left and right reel hubs 7 from being rotated when the tape cassette 1 is not in use.

The hub lock member 13 is provided with engaging protrusions 13a which correspond to engaging slits 7a formed around the outer peripheral portions of the reel hubs 7. The hub lock member 13 is always spring-biased in the locking direction by a hub lock spring 14 secured to a spring securing portion provided at the middle portion of the hub lock member 13. The hub lock spring 14 might be formed as a torsion spring. More specifically, the hub lock spring 14 is of inverted V-shape and its two ends 14a are brought into contact with a front wall 3a of the upper half 3, whereby the hub lock member 13 is always spring-biased in the rearward direction, that is in the direction in which the engaging protrusions 13a are engaged with the engaging slits 7a of the reel hubs 7. Thus, the reel hubs 7 are locked so as not to rotate when the tape cassette 1 is not in use.

When the tape cassette 1 is loaded onto the magnetic recording and reproducing apparatus and the lid 12 is opened upwardly and rotated as described above, rear end portions 12a of two side surfaces of the lid 12 are brought into contact with and in engagement with engaging portions 13c elongate to the front portions of the two end portions of the hub lock member 13, thereby to withdraw the engaging portions 13c. Therefore, the hub lock member 13 is moved forward, that is, in the direction in which the engaging protrusions 13a are disengaged from the engaging slits 7a of the reel hubs 7 while spring-biasing the torsion spring 14 in its opening direction, thus releasing the reel hubs 7 from their locked conditions.

The hub lock member 13 is assembled within the casing 2 when the upper and lower halves 3 and 4 are fastened together, such that the hub lock member 13 is slidably engaged on the upper half 3 in the front to back direction. An engaging structure in which the hub lock member 13 is engaged with the upper half 3 will be explained hereinafter. Rectangular openings 15 elongate in the front to back direction are formed through the left and right portions of the hub lock member 13. and the hub lock member 13 is attached to the upper half 3 by caulking pins 16 formed on the inner surface side of the upper part 3 within the openings 15. Therefore, the hub lock member 13 is slidably moveable along the inner surface of the upper half 3 in the front to back direction.

A slider 17 is attached to the bottom surface of the lower half 4 of the casing 2 so as to be slidable in the front to back direction. When the tape cassette 1 is not in use, the slider 17 is located at the front closing position and closes the pocket portion 10 and the reel shaft insertion apertures 5 of the lower half 4. When the tape cassette 1 is loaded onto the magnetic recording and reproducing apparatus, the slider 17 is slidably moved to the rear opening position by a mechanism of the apparatus, whereby the pocket portion 10 and the reel shaft insertion apertures 5 of the lower part 4 are opened.

A slider locking mechanism is provided between the slider 17 and the lower half 4 to hold the slider 17 in the locked condition at the front closing position and at the rear opening position. More specifically, as shown in Figure 2, this slider locking mechanism comprises left and right slider lock members 18 which are formed on one portion of the lower half 4 so as to be oscillatable in the up and down direction, and front and back engaging apertures 19a and 19b formed through the slider 17 in correspondence with the slider lock members 18. Under the condition that engaging convex portions 18a formed on the ends of the slider lock members 18 are engaged with the rear engaging apertures 19b, the slider 17 is locked at the front closing position, while under the condition that the engaging convex portions 18a of the slider lock members 18 are engaged with the front engaging apertures 19a, the slider 17 is locked at the rear opening position. The slider 17 locked by the slider locking members 18 is released from its locked condition by a releasing member (not shown) provided in the magnetic recording and reproducing apparatus.

Limiter pins 20 protrude on the inner side surface of the upper half 3 in correspondence with the slider lock members 18, and the end surfaces of the limiter pins 20 are opposed to the inner surface sides of the top portions of the slider locking members 18 with a predetermined spacing. The limiter pins 20 restrict the amount by which the slider lock members 18 are resiliently oscillated, so the limiter pins 20 can prevent the slider lock members 18 from being oscillated and deformed more than is necessary, thereby preventing damage.

Such an arrangement of lock spring and limiter pins cooperating with slider lock members is known from EP-A-0 323 199 on which the pre-characterising portion of claim 1 is based.

However, the slider 17 is locked only by the resiliency of the slider lock member 18 so that, if the slider 17 is opened and/or closed repeatedly or due to ageing change, the engaging force of the slider lock member 18 is weakened, resulting in the locked condition of the slider 17 being loosened.

To remove this disadvantage, a magnetic tape cassette has been proposed in which a coil spring is additionally interposed between the upper half 3 and the end portion of the slider lock member 18, and the lock holding force applied to the slider 17 by the slider lock member 18 is reinforced by the resilient force of this coil spring (see Japanese laid-open patent specification 62/279573 or EP-A-0 163 293). However, the assembly work involved in assembling this very small coil spring is complicated, which adds to the cost.

According to the invention there is provided a magnetic tape cassette having a cassette casing formed of upper and lower halves, reel hubs accommodated within the cassette casing and around which a magnetic tape is wound, a hub lock member to lock rotation of the reel hubs, a tape loading pocket portion formed on one of the upper and lower halves, a slider to open and close reel shaft insertion apertures, a slider lock member provided on the half through which the reel shaft insertion apertures are formed and to lock the slider at an open position and at a closed position, limiter pins to limit the travel of the lock member in order to prevent the slider lock member from being deformed more than is necessary, and a hub lock spring to spring-bias the hub lock member in the direction in which the reel hubs are locked;
characterised in that the hub lock spring comprises a pair of left and right hub lock springs each engaged at one end portion with the hub lock member, a coil spring portion is formed on the other end portion of each of the hub lock springs, the coil spring portions are engaged on the limiter pins and extend beyond the free ends of the limiter pins so as to spring-bias the slider lock members in a direction in which they lock the slider, and the hub lock springs are engaged with and secured at their intermediate portions to one of the upper and lower halves while being deformed resiliently.

The invention will now be described by way of example with reference to the accompanying drawings, throughout which like parts are referred to by like references, and in which:
Figure 1 is a perspective view of an example of a known magnetic tape cassette;
Figure 2 is a perspective view of the tape cassette of Figure 1 with a front lid and a slider open;
Figure 3 is a plan view of the tape cassette of Figure 1 showing the inside portion of an upper half thereof;
Figure 4 is a side view of the tape cassette of Figure 1 showing a cross-section of a portion thereof;

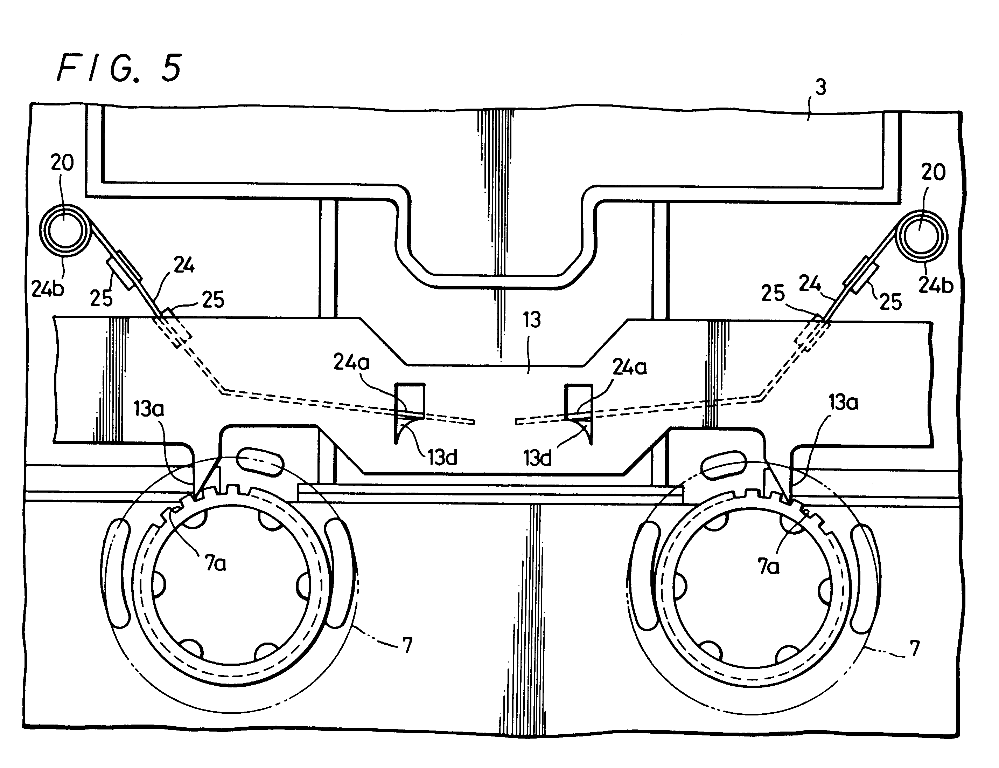

Figure 5 is a plan view of an embodiment of magnetic tape cassette according to the present invention showing the inside of a main portion of an upper half thereof;

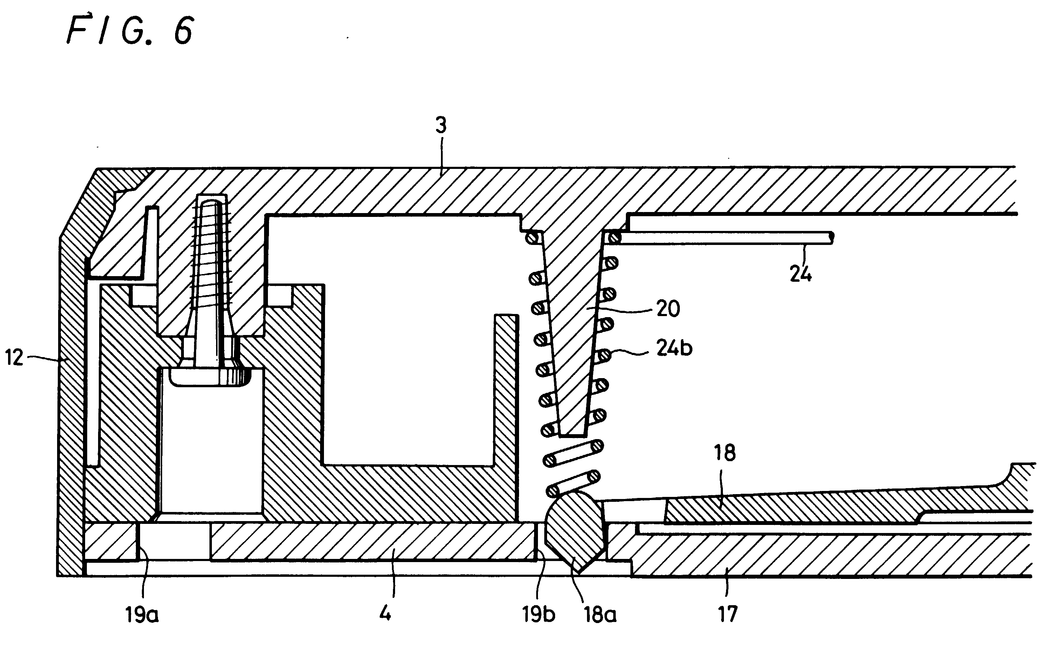

Figure 6 is a cross-sectional side view of a portion of the tape cassette of Figure 5;
Figure 7 is a fragmentary plan view showing a hub lock spring;
Figure 8A is a cross-sectional view on the line A - A in Figure 7;
Figure 8B is a cross-sectional view on the line B - B in Figure 7; and
Figures 9A and 9B are cross-sectional views corresponding to Figures 8A and 8B, respectively.

The most specific features of the embodiment lie in that a hub lock spring for spring-biasing a hub lock member in the locking direction also serves as an auxiliary spring for a slider lock member.

More specifically, the hub lock spring is formed of a pair of left and right hub lock springs 24. In the two hub lock springs 24, one end portion 24a of each is formed as a hub lock member spring-biasing portion which is slidably engaged with the hub lock member 13 to push the hub lock member 13. Thus, the hub lock springs 24 are constructed substantially as torsion springs. On the other end portions of the hub lock springs 24, there are respective coil spring portions 24b disposed perpendicular to the axial direction. The two hub lock springs 24 are symmetrical with respect to the up to down direction.

When the hub lock member 13 is assembled to the upper half 3, the two hub lock springs 24 are assembled in the magnetic tape cassette as follows. The coil spring portions 24b are engaged with limiter pins 20 mounted on the inner surface of the upper half 3 and the intermediate portions of the hub lock springs 24 are engaged with engagement supporting portions 25 protruding from the inner surface of the upper half 3, whereby the two hub lock springs 24 are provided symmetrically with respect to the centre of the hub lock member 13 on the inner surface of the upper half 3. Then, one end portion 24a of each spring 24 is brought into contact with and engaged with a contact engaging portion 13d of the respective hub lock member 13 on its side portion. Thus the two hub lock springs 24 are assembled to the upper half 3.

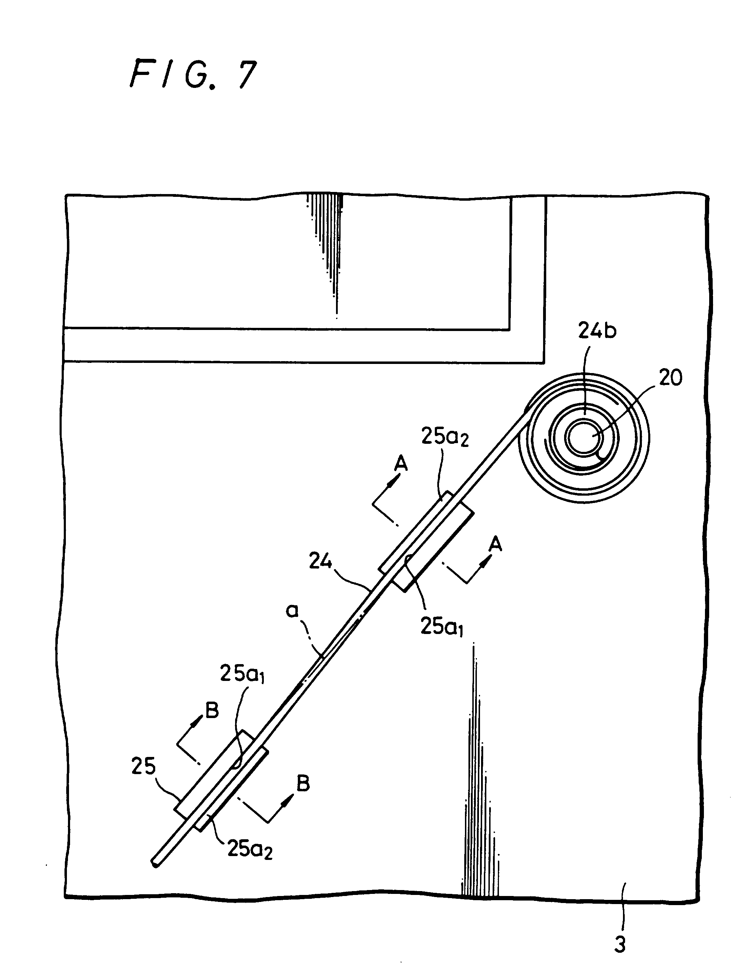

In this arrangement, the limiter pins 20 and the coil spring portions 24b of the two hub lock springs 24 are each shaped as frusta and, a plurality of, for example, two engagement supporting portions 25 for engagingly supporting the two hub lock springs 24 are each protruded on the inner surface of the upper half 3 at a predetermined spacing. In this embodiment, engaging surfaces 25a of the two engagement supporting portions 25 are formed to have configurations of L-shape section in their opposing directions, and vertical engagement surface portions 25a1 of the engaging surfaces 25a are coincident with a straight line a shown by a one-dot chain line in Figure 7. Accordingly, when the hub lock spring 24 is engaged with the engagement supporting portion 25, the hub lock spring 24 is deformed by the amount of its diameter between the engaging surfaces 25a so that the hub lock spring 24 is urged against the vertical engagement surface portions 25a1 and secured thereto by a force of restitution to become straight under the condition that it is in contact with horizontal engagement surface portions 25a2.

When the upper half 3 and the lower half 4 are fastened together, the top of the coil spring portion 24b of the hub lock spring 24 is brought into contact with the inner surface of the top portion of the slider lock member 18. In that case, the coil spring portion 24b of the hub lock spring 24 is opposed at its tapered portion to the lower half 4 and therefore comes into contact with the slider lock member 18 at its predetermined position positively. Thus, the resilient force of the hub lock spring 24 can reinforce the engaging force of the slider lock member 18 relative to the slider 17.

Under this condition, the hub lock spring 24 is secured at its intermediate portion to the upper half 3 by the engagement supporting portion 25 so that, even when one end portion 24 of the hub lock spring 24 is deformed with resiliency by the lock releasing operation of the hub lock member 13, the coil spring portion 24b can be prevented from being affected at all. Accordingly, the coil spring portion 24b can be prevented from being displaced from the predetermined portion of the slider lock member 18 and the spring force of the coil spring portion can be prevented from being changed. Moreover, one end portion 24a of the hub lock spring 24 can positively spring-bias the hub lock member 13 regardless of the contraction and expansion of the coil spring portion 24b, that is the pushing operation against the slider lock member 18.

Moreover, since the hub lock springs 24 are separately provided with respect to the slider lock member 18, the spring-biasing force is applied to the slider lock member 18 in a well-balanced condition, so the two reel hubs 5 are locked or released in or from their locked states smoothly and positively.

As described above, since the symmetrical hub lock springs 24 for spring-biasing the hub lock member 13 in the locking direction are provided with the coil spring portion 24b which reinforce the lock holding force of the slider lock member 18, increase in the number of parts can be avoided and the assembly process can be simplified as compared with a tape cassette in which the slider lock reinforcing spring is independently assembled.

Since the hub lock spring 24 is not affected by its end portion 24b and acts as the spring-biasing means independently of its end portion 24a which spring-biases the hub lock member 13, the coil spring portion 24b can positively reinforce the lock holding force of the slider lock member 18. Accordingly, even when the slider lock member 18 itself is lowered in resiliency by repeatedly opening and closing the slider 17 or due to ageing change or even when the slider lock member 18 is deformed by heat while being kept in a high temperature under the condition that the slider 17 is opened or that the slider 17 is not closed fully, the slider lock member 18 can positively hold the slider 17 in the locked condition.

Moreover, in this embodiment, since the limiter pin 20 and the coil spring portion 24b of the hub lock spring 24 are shaped as frusta, the coil spring portion 24b can be smoothly inserted onto the limiter pin 20, which simplifies the assembly process.

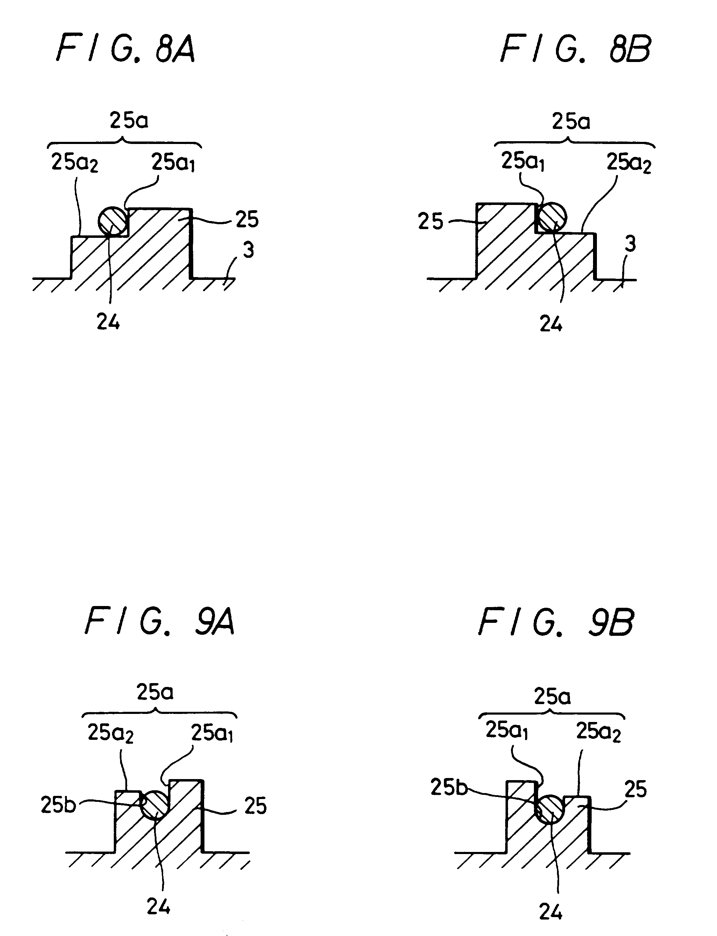

Various changes and modifications are possible. By way of example, the engagement supporting portion 25 for engagingly supporting the hub lock spring 24 may be modified as follows. The engaging surface thereof may be U-shaped in cross-section as shown in Figure 9. That is, an engaging concave portion 25b along the vertical engaging surface portion 25a1 is formed on the horizontal engaging surface portion 25a2 of the engaging surface 25a which is formed similarly to the engaging surface shown in Figures 8A and 8B, and the hub lock spring 24 may be engaged with and supported by this engaging concave portion 25b. By forming the engagement supporting portion 25, it is possible to support and secure the hub lock spring 24 more positively.

In addition, the layout of the respective members may be reversed in the upper and lower parts, and the configurations of the respective members may be changed, if necessary.

## Claims

1. A magnetic tape cassette (1) having a cassette casing (2) formed of upper and lower halves (3, 4), reel hubs (7) accommodated within the cassette casing (2) and around which a magnetic tape (6) is wound, a hub lock member (13) to lock rotation of the reel hubs (7), a tape loading pocket portion (10) formed on one of the upper and lower halves (3, 4), a slider (17) to open and close reel shaft insertion apertures (5), a slider lock member (18) provided on the half (3, 4) through which the reel shaft insertion apertures (5) are formed and to lock the slider (17) at an open position and at a closed position, limiter pins (20) to limit the travel of the lock member (18) in order to prevent the slider lock member (18) from being deformed more than is necessary, and a hub lock spring (24) to spring-bias the hub lock member (13) in the direction in which the reel hubs (7) are locked;
characterised in that the hub lock spring comprises a pair of left and right hub lock springs (24) each engaged at one end portion (24a) with the hub lock member (13), a coil spring portion (24b) is formed on the other end portion of each of the hub lock springs (24), the coil spring portions (24b) are engaged on the limiter pins (20) and extend beyond the free ends of the limiter pins (20) so as to spring-bias the slider lock members (18) in a direction in which they lock the slider (17), and the hub lock springs (24) are engaged with and secured at their intermediate portions to one of the upper and lower halves (3, 4) while being deformed resiliently.

2. A cassette (1) according to claim 1, wherein the limiter pins (20) are formed on an inner surface of the half (3, 4) opposing an end of the slider lock member (18) and are shaped as frusta which are tapered to be thinner at the free ends thereof.

## Patentansprüche

1. Magnetbandkassette (1) mit
- einem Kassettenghäuse (2), das aus einer oberen Hälfte (3) und einer unteren Hälfte (4) gebildet ist,
- im Kassettengehäuse (2) angebrachten Spulenkernen (7), auf denen ein Magnetband (6) aufgewickelt ist,
- einem Spulenarretierelement (13), das dazu dient, ein Drehen der Spulenkeme (7) zu verhindern,
- einem Bandladefach (10), das in der oberen Hälfte (3) oder der unteren Hälfte (4) gebildet ist,
- einem Gleitverschluß (17) zum Öffnen und Schließen von Antriebsspindel-Einführöffnungen (5),
- einem Verschlußarretierelement (18), das an der Hälfte (3, 4) vorgesehen ist, in der die Antriebsspindel-Einführöffnungen (5) gebildet sind und dazu dient, den Gleitverschluß (17) in Öffnungsstellung und Schließstellung zu arretieren,
- Begrenzungsstiften (20), die dazu dienen, die Bewegung des Verschlußarretierelements (18) einzuschränken, um eine übermäßige Verformung des Verschlußarretierelements (18) zu verhindern, sowie
- einer Spulenarretierfeder (24) zur Federvorbelastung des Spulenarretierelements (13) in der Richtung, in der die Spulenkerne (7) arretiert werden,
dadurch gekennzeichnet
daß die Spulenarretierfeder eine linke und eine rechte Spulenarretierfeder (24) umfaßt, die an einem Endabschnitt (24a) mit dem Spulenarretierelement (13) in Eingriff sind, daß am anderen Endabschnitt der Spulenarretierfedern (24) jeweils ein Schraubenfederabschnitt (24b) gebildet ist, daß die Schraubenfederabschnitte (24b) auf den Begrenzungsstiften (20) sitzen und Über deren freie Enden hinausragen, so daß die Verschlußarretierelemente (18) in der Richtung federvorbelastet sind, in der sie den Gleitverschluß (17) arrretieren, und daß die Spulenarretierfedern (24) an ihren mittleren Abschnitten in Eingriff mit der oberen Hälfte (3) oder der unteren Hälfte (4) gehalten und dabei elastisch verformt werden.

2. Kassette (1) nach Anspruch 1, bei der die Begrenzungsstifte (20) auf der Innenseite derjenigen Hälfte (3, 4) gebildet sind, die einem Ende des Verschlußarretierelements (18) gegenüberliegt, und als Kegelstümpfe geformt sind, deren freie Enden sich verjüngen.

## Revendications

1. Cassette à bande magnétique (1) comportant un boîtier de cassette (2) formé d'une moitié supérieure et d'une moitié inférieure (3, 4), des moyeux de bobines (7) logés dans le boîtier de cassette (2) et autour desquels est enroulée une bande magnétique (6), un élément de blocage de moyeux (13) pour bloquer la rotation des moyeux de bobines (7), une partie en poche de chargement de bande (10) formée sur l'une des deux moitiés supérieure et inférieure (3, 4), un coulisseau (17) pour ouvrir et fermer des ouvertures d'introduction (5) pour des arbres de bobine, un élément de blocage de coulisseau (18) prévu sur la moitié (3, 4) à travers laquelle sont formées les ouvertures d'introduction (5) des arbres de bobine et pour bloquer le coulisseau (17) à une position ouverte et à une position fermée, des doigts de limitation (20) pour limiter le déplacement de l'élément de blocage (18) afin d'empêcher que l'élément de blocage de coulisseau (18) soit déformé plus que nécessaire, et un ressort de blocage de moyeux (24) pour repousser élastiquement l'élément de blocage de moyeux (13) dans la direction dans laquelle les moyeux de bobines (7) sont bloqués ;
caractérisée en ce que le ressort de blocage de moyeux comprend une paire de ressorts de blocage droit et gauche (24) engagés chacun à une partie terminale (24a) avec l'élément de blocage de moyeux (13), une partie de ressort à boudin (24b) est formée sur l'autre partie terminale de chacun des ressorts de blocage (24), les parties de ressort à boudin (24b) sont engagées sur les doigts de limitation (20) et s'étendent au-delà des extrémités libres des doigts de limitation (20) de manière à solliciter élastiquement les éléments de blocage coulissants (18) dans une direction dans laquelle ils bloquent le coulisseau (17), et les ressorts de blocage de moyeux (24) sont engagés et fixés à leur partie intermédiaire sur l'une des deux moitiés supérieure et inférieure (3, 4) tout en étant déformés élastiquement.

2. Cassette (1) selon la revendication 1, dans laquelle les doigts de limitation (20) sont formés sur une surface intérieure de la moitié (3, 4) à l'opposé d'une extrémité de l'élément de blocage de coulisseau (18), et présentent la forme de troncs de cône qui sont inclinés de manière à être plus minces à leurs extrémités libres.
